# EUROPEAN PATENT APPLICATION

(11) **EP 1 398 776 A1**
(43) Date of publication of application: **17.03.2004**
(21) Application number: 03019696.8
(22) Date of filing: 09.09.2003
(51) Int. Cl.: G11B 7/24

(54) **Optical recording medium**

(30) Priority: 11.09.2002 JP 2002264873
(71) Applicant: TDK Corporation, Chuo-ku, Tokyo 103-8272 (JP)
(72) Inventor: Shingai, Hiroshi, TDK Corp., Chuo-ku Tokyo 103-8272 (JP); Chihara, Hiroshi, TDK Corp., Chuo-ku Tokyo 103-8272 (JP); Tanaka, Yoshitomo, TDK Corp., Chuo-ku Tokyo 103-8272 (JP); Oishi, Masahiro, TDK Corp., Chuo-ku Tokyo 103-8272 (JP); Utsunomiya, Hajime, TDK Corp., Chuo-ku Tokyo 103-8272 (JP)
(74) Representative: VOSSIUS & PARTNER

(57) **Abstract**

An optical recording medium according to the present invention includes a phase change recording layer where reversible phase changes between a crystal phase and an amorphous phase are used, wherein the recording layer(4) includes at least Sb, Mn, and Te and, in a state corresponding to the crystal phase, has a structure where one diffracted ray is detected by X-ray diffraction as being present in respective ranges of spacings (Å) of 3.10±0.03, 2.25±0.03, and 2.15±0.03, in a range of between 3.13 and 2.12 spacing inclusive, with diffracted rays not being detected in other ranges within the 3.13 to 2.12 spacing range. Accordingly, the optical recording medium(1) can be reliably crystallized even when the irradiation time of laser light is short, and also has superior thermal stability in an amorphous state.

## Description

The present invention relates to an optical recording medium that has a phase-change recording layer.

Optical recording media that are capable of high-density recording and on which recorded information can be overwritten have been subject to much attention in recent years. Information is recorded on phase-change optical recording media, which are one example of such rewritable optical recording media, by changing the crystal state of a recording layer through irradiation with laser light. Recorded information is reproduced by detecting changes in the reflection ratio of the recording layer due to such changes in the crystal state. Phase-change optical recording media have been subject to particular attention since it is possible to rewrite the recorded information by modulating the intensity of a single laser beam and to record and reproduce information using an optical system with a simpler construction than an optical system used with magneto-optical recording media.

GeTe, GeTeSe, GeTeS, GeSeS, GeSeSb, GeAsSe, InTe, SeTe, SeAs, Ge-Te-(Sn,Au,Pd) , GeTeSeSb, Ge-Sb-Te, Ag-In-Sb-Te, and the like are known as recording materials that can compose a phase-change recording layer. Especially recently, chalcogenide compounds, such as Ge-Sb-Te materials and Ag-In-Sb-Te materials, that include elements (chalcogens) belonging to group VIb, such as Te and Se, in addition to the main constituent Sb have been used for reasons such as the large difference in the reflectivity ratio between the crystal state and the amorphous state and their relativity high stability in the amorphous state.

Usually, when information is recorded on a rewritable phase-change optical recording medium, the crystal state of the entire recording layer is first initialized and the recording layer is then irradiated by laser light set at a high power (the "recording power") capable of raising the temperature of the recording layer to the melting point or above. By doing so, amorphous recording marks are formed at the positions that were irradiated by the laser light of the recording power through rapid cooling after the recording layer has melted. On the other hand, recording marks that have been formed are erased by irradiating the marks with a laser with a power ("erasing power") that is capable of raising the temperature of the recording layer to the crystallization temperature or above. The recording marks (amorphous parts) are restored to the crystal state (i.e., the recording marks are erased) by slowly cooling the parts that were irradiated by the laser of the erasing power after the recording layer has been heated to the crystallization temperature or above. In this way, by modulating the power of a single beam, it is possible to perform rewrites on a rewritable phase-change optical recording medium.

As one example, a phase change recording layer including a metastable Sb₃Te phase, which includes Sb and Te and belongs to a space group Fm3m, is disclosed in Japanese Laid-Open Patent Publication No. 2000-43415. This Sb₃Te phase has an FCC (face centered cubic) structure and in the cited publication, recording is performed at a linear velocity of 7m/s using a laser with a wavelength of 635nm.

Japanese Laid-Open Patent Publication No. 2000-313170 discloses a phase change recording layer with a composition that includes Sb, Te, and Ge, and is expressed as ((SbₓTe₁₋ₓ)_{y} Ge_{1-y}) _{z}M_{1-z}. This publication states that in the crystal state, the recording layer should preferably be composed of a crystal phase with a face-centered cubic structure, and in this case, a structure with a single crystal phase or a plurality of crystal phases may be used, though when there are a plurality of crystal phases, there should preferably be no lattice mismatching. In addition, in the embodiments of the same publication, recording is performed using a laser with a wavelength of 780nm, with the linear velocity varying between 1.2m/s and 8.1m/s.

However, by investigating the optical recording media described above, the present inventors discovered the following problems. To achieve a high recording density and a high transfer rate, in recent years the wavelength of the irradiating laser during recording and reproduction has been reduced, the numerical aperture of the objective lens of the recording/reproducing optical system has been raised, and high linear velocities have been used for the medium. In this case, the spot diameter of the laser on the surface of the recording layer is expressed as λ/NA where λ is the laser wavelength and NA is the numerical aperture, and the laser irradiation time (that is, the time required for the beam spot to pass) on the recording layer is given by this spot diameter λ/NA divided by the linear velocity V of the medium (that is, (λ/NA)/V). Accordingly, the laser irradiation time of the recording layer is reduced as high recording densities and high transfer rates are achieved. This means that the optical recording medium needs to have a recording layer with a high crystallization speed at which crystallization can be performed reliably, even when the irradiation time of a laser is short. It is also necessary for the information recorded on this recording layer to be reliably maintained even when there are environmental changes, which is to say, the recording layer needs to have superior thermal stability in the amorphous state. However, the recording media disclosed by Japanese Laid-Open Patent Publication Nos. 2000-43415 and 2000-313170 mentioned above do not consider the use of a laser with a short wavelength of around 400nm as the light source, and have linear velocities that at 10m/s or below are extremely slow, resulting in the problem of these recording media being incompatible with recording at high densities and high transfer rates.

The present invention was conceived in view of the above problems, and it is a primary object of the invention to provide an optical recording medium that can be reliably crystallized even when the irradiation time of laser light is short and also has superior thermal stability in an amorphous state.

An optical recording medium according to the present invention includes a phase change recording layer where reversible phase changes between a crystal phase and an amorphous phase are used, wherein the recording layer includes at least Sb, Mn, and Te and, in a state corresponding to the crystal phase, has a structure where one diffracted ray is detected by X-ray diffraction as being present in respective ranges of spacings (Å) of 3.10±0.03, 2.25±0.03, and 2.15±0.03, in a range of between 3.13 and 2.12 spacing inclusive, with no other diffracted rays being detected in the 3.13 to 2.12 spacing range.

By including a recording layer with the structure described above, this optical recording medium has superior thermal stability in an amorphous state and can be reliably crystallized even when the irradiation time of laser light is short. It is therefore possible to provide an optical recording medium that is compatible with high density recording and high transfer rates.

In this case when indexing as a hexagonal lattice is performed in a state corresponding to the crystal phase, the recording layer should preferably have a structure where a lattice plane corresponding to the diffracted ray present in a range of the 3.10±0.03 spacing is capable of being indexed as a hexagonal (012) plane, a lattice plane corresponding to the diffracted ray present in a range of the 2.25±0.03 spacing is capable of being indexed as a hexagonal (104) plane, and a lattice plane corresponding to the diffracted ray present in a range of the 2.15±0.03 spacing is capable of being indexed as a hexagonal (110) plane. By using this construction, that is, by including a recording layer composed of a single phase with an A7 structure, it is possible to suppress decreases in the crystallization speed due to phase separation, deterioration in the overwriting characteristics, deterioration in the storage characteristics due to precipitation of some of the elements, and the like. This makes it possible to increase the crystallization speed (transfer rate) and to increase the storage stability.

Another optical recording medium according to the present invention includes a phase change recording layer where reversible phase changes between a crystal phase and an amorphous phase are used, wherein when indexing has been performed for a hexagonal lattice in a state corresponding to the crystal phase, the recording layer has a structure where an axial ratio c/a of a c axis length to an a axis length is between 2.558 and 2.676 inclusive.

By including a recording layer with the above structure, the optical recording medium can sufficiently maintain the thermal stability of the amorphous state and crystallization can be performed reliably even when the irradiation time of laser light is short. It is therefore possible to provide an optical recording medium that is compatible with high density recording and high transfer rates.

The present application is based on Japanese Patent Application No. 2002-2648973 filed on 11 September 2002, the entire content of which is hereby incorporated by reference.

These and other objects and features of the present invention will be explained in more detail below with reference to the attached drawings, wherein:

FIG. 1 is a cross-sectional view showing the construction of a recording medium;

FIG. 2 is a cross-sectional view showing the construction of another recording medium;

FIG. 3 is a table showing the compositions of respective recording layers in first and second embodiments and first and second comparative examples;

FIG. 4 is a characteristics graph showing the relationship between transfer rate and erasure rate for the first and second embodiments and the second comparative example;

FIG. 5 is an X-ray diffraction graph for samples 1 to 4 corresponding to the first and second comparative examples and the first and second embodiments;

FIG. 6 is an experimental results table showing the relationship between axial ratio, transfer rate, and laser irradiation time in first to fifth embodiments; and

FIG. 7 is an experimental results table showing the relationship between axial ratio, transfer rate, and laser irradiation time in sixth to ninth embodiments.

Preferred embodiments of an optical recording medium according to the present invention will be described below with reference to the attached drawings.

A recording layer of the optical recording medium according to the present invention includes at least Sb, Mn, and Te. It is preferable for this recording layer to have a structure whereby when X-ray diffraction is performed using Cu-Kα rays, for example, on the crystal phase (crystallized state), one diffracted ray is detected in each of three ranges with respective spacings *d* (Å) of 3.10±0.03, 2.25±0.03, and 2.15±0.03, in a range of between 3.13 and 2.12 spacing inclusive, with no other diffracted rays being detected in the 3.13 to 2.12 spacing range. The presence of such diffracted rays can be easily determined through structural analysis using an X-ray diffraction (XRD) device or a transmission electron microscope (TEM). By constructing the recording layer so that one diffracted ray is detected in each of the ranges with the stated spacings *d* (Å) and diffracted rays are not detected in other ranges within the 3.13 to 2.12 spacing range, a sufficiently high crystallization speed and a sufficient thermal stability in the amorphous state can be achieved, thereby producing a phase change recording layer that is compatible with high density recording and high transfer rates.

When the recording layer of the optical recording medium of the present invention is indexed as a hexagonal lattice in the crystal phase, the axial ratio *(c*/*a)* of the c axis length to the *a* axis length in the hexagonal lattice is set as being in a range of 2.558 and 2.676 inclusive. By setting the axial ratio c/a in the stated range, compared to a recording layer with a face centered cubic structure where the structure of the crystal state is cubic (where the axial ratio *c*/*a* is 2.45), the high crystallization speed can be raised further and it is therefore possible to further increase the transfer rate of data. When the axial ratio exceeds 2.676, the crystallization speed becomes too fast, resulting in the problem of decreased thermal stability in the amorphous state, while when the axial ratio is below 2.558, there is the problem of a decrease in the crystallization speed. Accordingly, the axial ratio should preferably be set in the range mentioned above.

When X-ray diffraction is performed on the recording layer using Cu-Kα rays, for example, to find the axial ratio *c*/*a,* indexing for a hexagonal lattice is performed on the diffracted rays that appear in the X-ray diffraction graph, the calculation "*c* axis length/a axis length" is performed in the hexagonal lattice based on the positions of the diffracted rays, and the result is set as the axial ratio *c*/*a*. There are no particular limitations on the diffracted rays used in the calculation of the axial ratio *c*/*a*, but it is preferable to use a diffracted ray that originates from a hexagonal (104) plane and a diffracted ray that originates from a hexagonal (110) plane since these rays are present on a narrow spacing side (high angle side) and are close to one another. It should be noted that during X-ray diffraction using the Cu-Kα rays described above as one example, indexing can be performed so as to set the lattice plane corresponding to the diffracted ray present in the range of the spacing *d* (Å) of 3.10±0.03 as a hexagonal (012) plane, the lattice plane corresponding to the diffracted ray present in the range of the spacing *d* (Å) of 2.25±0.03 as a hexagonal (104) plane, and the lattice plane corresponding to the diffracted ray present in the range of the spacing *d* (Å) of 2.15±0.03 as a hexagonal (110) plane.

In the state of the crystal phase, the recording layer of the optical recording medium of the present invention should preferably be composed of rhombohedral crystals of a single phase with an A7 structure. The numbers and positions of the diffracted rays that appear in the X-ray diffraction graph for the recording layer change depending on the included amounts of Mn and Te with respect to Sb, and when an excessive amount of Mn is included for example, the generation of on SbMn in the recording layer results in diffracted rays showing the presence of SbMn appearing in the diffraction graph. Accordingly, by referring to a database such as JCPDS cards, a recording layer in which diffracted rays only appear in the ranges of the three spacings *d* (Å) described above in a range of between 3.13 and 2.12 spacing inclusive, can be easily distinguished as having a single-phase, rhombohedral crystal structure due to Sb. Here, the expression "single-phase" refers to a concept including a state wherein aside from Sb, the other elements Mn and Te (sometimes also In and Ge) are included in the recording layer, but these elements are in solid solution within the Sb lattice. In this way, by constructing a recording layer of single-phase rhombohedral crystals with an A7 structure in the crystal phase state, it is possible to suppress decreases in the crystallization speed due to phase separation, deterioration in the overwriting characteristics, deterioration in the storage characteristics due to precipitation of some of the elements, and the like. This makes it possible to increase the crystallization speed (transfer rate) and to increase the storage stability.

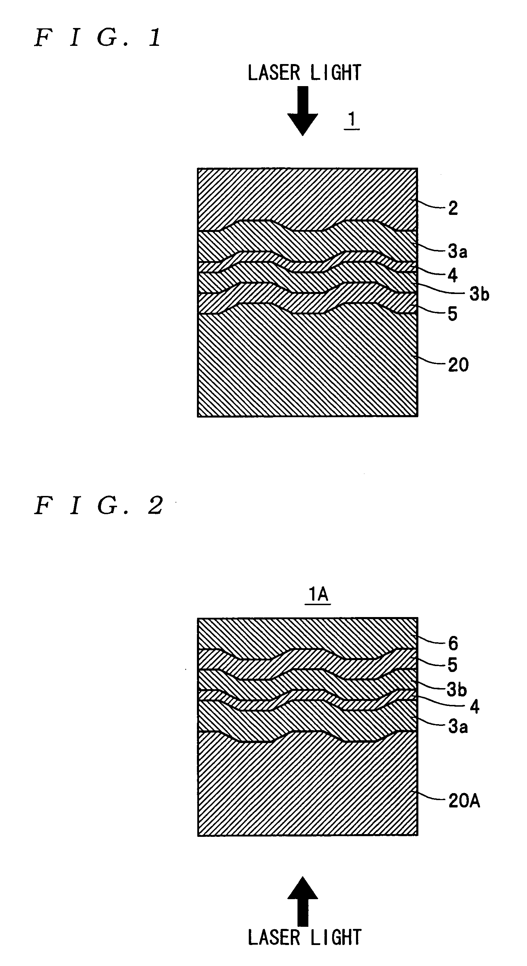

Aside from the composition of the recording layer, there are no particular limitations for the construction of an optical recording medium according to the present invention. As one example of the construction of a typical phase change optical recording medium 1, as shown in FIG. 1, a reflective layer 5, a second dielectric layer 3b, a recording layer 4, a first dielectric layer 3a, and a light transmitting layer 2 may be successively formed in layers on a substrate 20. It is also possible to construct an optical recording medium by providing a heat sink layer composed of aluminum nitride (AlN), for example, between the first dielectric layer 3a and the light transmitting layer 2. With this optical recording medium 1, laser light is irradiated via the light transmitting layer 2 during recording and reproduction.

It is also possible to apply the present invention to an optical recording medium with the construction shown in FIG. 2. As shown in FIG. 2, a phase change optical recording medium 1A of this example construction has a first dielectric layer 3a, a recording layer 4, a second dielectric layer 3b, a reflective layer 5, and a protective layer 6 successively formed in layers on a light transmitting substrate 20A. With this optical recording medium 1A, laser light is irradiated via the light transmitting substrate 20A during recording and reproduction.

### Embodiments

The present invention will be described in detail below using several specific embodiments.

### First and Second Embodiments and First and Second Comparative Examples

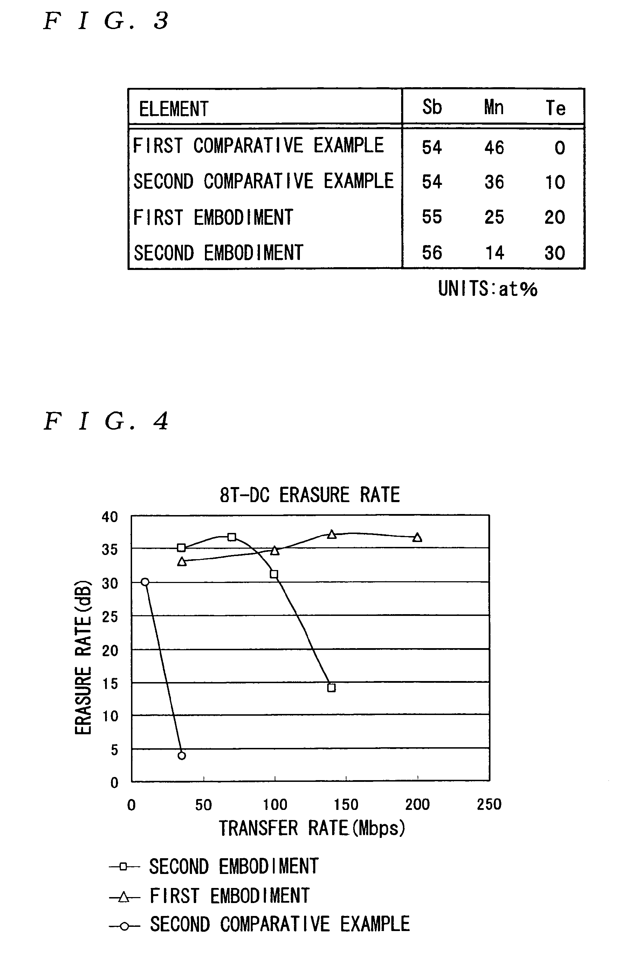

Polycarbonate discs, which have a diameter of 120mm and a thickness of 1.1mm, are formed by injection molding, and in which grooves are simultaneously formed, were used as the substrate 20. A plurality of optical recording media were manufactured by successively forming the reflective layer 5, the second dielectric layer 3b, the recording layer 4, the first dielectric layer 3a and the light transmitting layer 2 in layers on the surfaces of these discs as shown in FIG. 1. In this case, the first and second embodiments and the first and second comparative examples were produced by varying the Sb, Mn, and Te composition in the recording layers 4 of the optical recording media as shown in FIG. 3, with the values in the chart being atomic percentages (at%).

In this case, the reflective layer 5 is formed by sputtering in an Ar atmosphere. A ratio for Ag, Pd, and Cu of 98:1:1 was used in the target. The thickness of the reflective layer 5 was set at 100nm.

The second dielectric layer 3b was formed by sputtering in an Ar atmosphere using an Al₂O₃ target. The thickness of the second dielectric layer 3b was set at 7nm. The recording layer 4 was formed by threeelement sputtering in an Ar atmosphere using targets of the respective elements Sb, Mn, and Te as the target. The thickness of the recording layer 4 was set at 14nm. The first dielectric layer 3a was formed by sputtering in an Ar atmosphere using a ZnS (80mol%)-SiO₂(20mol%) target. The thickness of the first dielectric layer 3a was set at 110nm. The light transmitting layer 2 was formed via spin coating using a UV-curing acrylic resin. The thickness of the light transmitting layer 2 was set at 0.1mm.

Next, the respective recording layers 4 of the optical recording media of the first and second embodiments and the first and second comparative examples were initialized (crystallized) using a bulk eraser. Next, at the following conditions-laser wavelength=405nm, numerical aperture NA=0.85, modulation method=(1,7) RLL, channel bit length=0.13µm/bit, and format efficiency=80%-the transfer rate for recording and erasing (the linear velocity, that is, the irradiation time of the laser spot) was varied, and the erasure rate for a case where 8T marks are erased with a DC erasing power (hereinafter this rate is called the "8T-DC erasure rate" and is expressed in dB units) was measured for each transfer rate. The relationship between the transfer rate and the erasure rate for the optical recording media of the first and second embodiments and the first and second comparative examples is shown in FIG. 4. It should be noted that the first comparative example is not shown in the drawing because it was not possible to delete the 8T marks at any of the transfer rates.

As shown in FIG. 4, the erasure rate at a low transfer rate of around 10Mbps was 30dB for the optical recording medium of the second comparative example. While 30dB, which is a benchmark erasure rate for rewriting, can be realized, when the transfer rate exceeds 10Mbps, the erasure rate rapidly falls below 30dB. As a result, it was confirmed that for the optical recording medium of the second comparative example, it was not possible to record and erase information in a region where the transfer rate exceeds 10Mbps. On the other hand, with the optical recording medium according to the first embodiment, it is possible to maintain a sufficient erasure rate of 33dB or above up to a transfer rate of 200Mbps. With the optical recording medium of the second embodiment, it is possible to maintain a sufficient erasure rate of 30dB or above up to a transfer rate of 100Mbps. However, with the optical recording medium of the second embodiment, this erasure rate falls rapidly below 100Mbps and is below 15dB at around 140Mbps. As a result, it was confirmed that with the optical recording medium of the second embodiment, the recording and erasing of information is problematic in a region where the transfer rate exceeds 100Mbps.

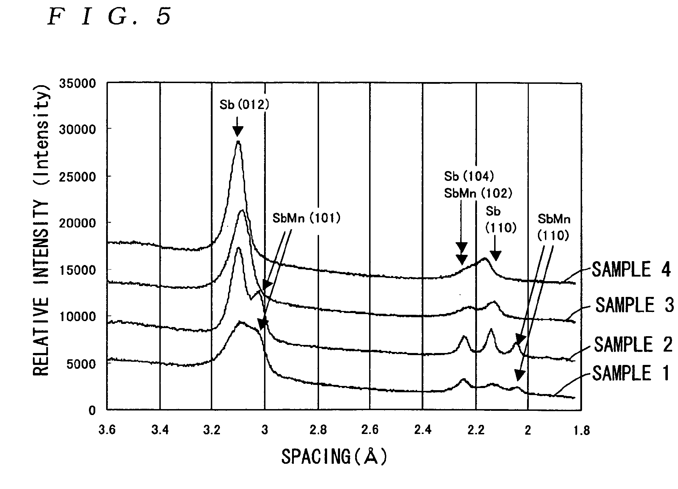

Samples 1 to 4 for X-ray diffraction analysis were also manufactured corresponding to the optical recording media of the first and second embodiments and the first and second comparative examples. In this case, the samples 1-4 were manufactured by forming 140nm-thick recording layers with the same compositions as the optical recording media of the first and second embodiments and the first and second comparative examples on top of substrates composed of polycarbonate discs with a diameter of 120mm and a thickness of 1.1mm. In this case, X-ray diffraction analysis was performed after initialization (crystallization) had been performed on the recording layers of the samples 1 to 4 using a bulk eraser. In this X-ray diffraction analysis, a thin-film analyzing X-ray diffractometer (the "ATX-G" model manufactured by RIGAKU CORPORATION) was used as the source for Cu-Kα rays. The relationship between the spacings *d* (Å) and the intensity of the diffracted rays is shown for the samples 1 to 4 in FIG. 5.

According to FIG. 5, with the samples 1 and 2 that respectively correspond to the optical recording media of the first and second comparative examples, a total of five diffracted rays appear in a range of between 3.13 and 2.12 spacing inclusive, one each in the respective ranges of a spacing *d*=3.10±0.03, a spacing *d*=3.02±0.03, a spacing *d*=2.25±0.03, a spacing *d*=2.15±0.03, and a spacing *d*=2.05±0.03. Also, with the samples 3 and 4 that respectively correspond to the optical recording media of the first and second embodiments, a total of three diffracted rays appear in a range of between 3.13 and 2.12 spacing inclusive, one each in the respective ranges of a spacing *d*=3.10±0.03, a spacing *d*=2.25±0.03, and a spacing *d*=2.15±0.03. By comparing these diffracted rays with JCPDS cards, in order starting with the widest spacing *d*, the diffracted rays for the samples 1 and 2 were identified as rays emanating from Sb(012) plane, SbMn(101) plane, a range where Sb(104) plane and SbMn(102) plane overlap, Sb(110) plane, and SbMn(110) plane. In the same way, in order starting with the widest spacing d, the diffracted rays for the samples 3 and 4 were specified as rays emanating from Sb(012) plane, Sb(104) plane and Sb(110) plane. From these results, it was confirmed that in the samples 1 and 2, the crystallized recording layer is composed of two crystal phases of Sb and SbMn, while in samples 3 and 4, the crystallized recording layer is composed of a single crystal phase of Sb.

Furthermore, TEM observation was performed on the crystallized state of the samples 3 and 4. As in the results of the X-ray diffraction, diffraction rings for Sb(012) plane, Sb(104) plane and Sb(110) plane could be observed. It was also possible to clearly distinguish a diffraction ring for Sb(003) plane that could not be observed with X-ray diffraction. From this observation result, it was confirmed that in the samples 3 and 4 (which are the same as the optical recording media of the first and second embodiments), the crystallized recording layer is composed of a single phase with an A7 structure.

When the results of the comparisons of the samples 1 to 4 and the optical recording media of the first and second embodiments and the first and second comparative examples shown in FIGS. 4 and 5 described above were collated, it was confirmed that a sufficient erasure rate of 30dB or above can be achieved at transfer rates up to at least 100Mbps with optical recording media for which a total of three diffracted rays in a range of between 3.13 and 2.12 spacing inclusive made up of respective rays in ranges of the spacings 3.10±0.03, 2.25±0.03, and 2.15±0.03 appear when X-ray diffraction is performed on the crystallized recording layer. Also, by comparing the optical recording media of the first and second embodiments with one another, it was confirmed that the optical recording medium for which the two single diffracted rays in the ranges of the spacings 2.25±0.03 and 2.15±0.03 are more clearly separated is preferable since a sufficient erasure rate can be achieved at faster transfer rates (up to 200Mbps).

### Third, Fourth and Fifth Embodiments

A plurality of optical recording media were manufactured in the same way as the optical recording media of the first and second embodiments described above. In this case, the third, fourth and fifth embodiments were produced using different compositions of Sb, Mn, and Te in the respective recording layer 4 of each optical recording medium. Here, the composition of the recording layer in the optical recording medium of the third embodiment was set at Sb₆₀(MnTe)₄₀, the composition of the recording layer in the optical recording medium of the fourth embodiment was set at Sb₄₀(MnTe)₆₀, and the composition of the recording layer in the optical recording medium of the fifth embodiment was set at Sb₇₆(MnTe)₂₄. Samples 5 to 7 for X-ray diffraction analysis were manufactured corresponding to the third, fourth and fifth embodiments respectively by forming recording layers of the same compositions as the optical recording media of the third, fourth, and fifth embodiments with a thickness of 140nm, in the same way as the optical recording media of the first and second embodiments and the samples 3 and 4.

After initialization (crystallization) of the respective recording layers 4 of the third, fourth, and fifth embodiments using a bulk eraser, the 8T-DC erasure rate (dB) was measured under the same conditions as the first and second embodiments. Also, after initialization (crystallization) of the recording layers of the samples 5 to 7 for X-ray diffraction purposes, X-ray diffraction analysis was performed and X-ray diffraction graphs were produced under the same conditions as the samples 1 to 4. It should be noted that according to the results of this X-ray diffraction analysis, it was confirmed that in the same way as the samples 3 and 4, the samples 5 to 7 (that is, the optical recording media of the third, fourth, and fifth embodiments) have crystallized recording layers composed of a single phase with an A7 structure.

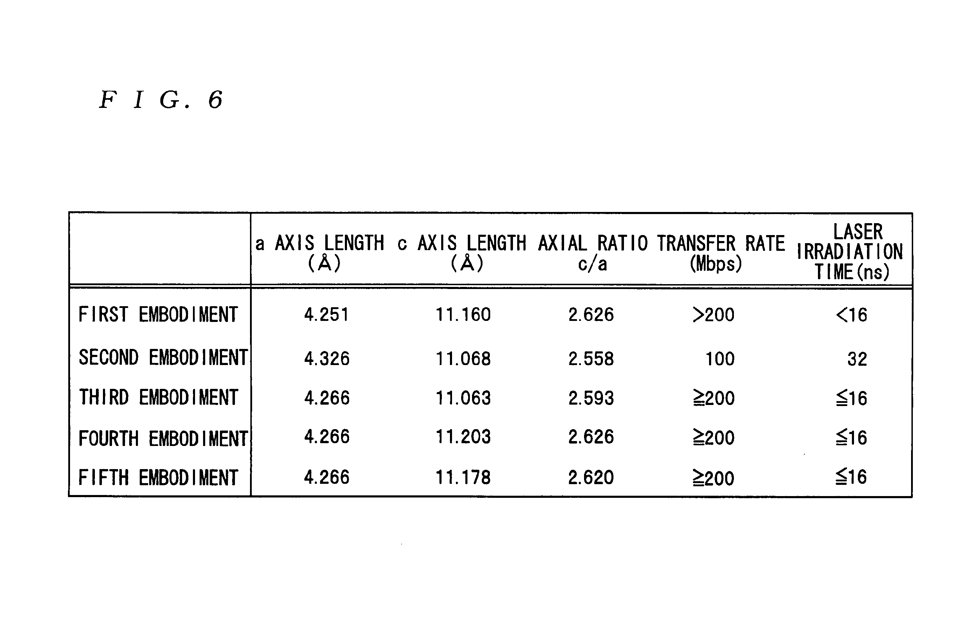

Next, indexing as a hexagonal lattice was performed for the diffracted rays appearing in the X-ray diffraction graphs of these third, fourth and fifth embodiments and the first and second embodiments, the respective *a* axis lengths and *c* axis lengths were calculated from the diffracted rays that originate from the hexagonal (104) plane and the hexagonal (110) plane, and the respective axial ratios *c*/*a* of the *c* axis length to the a axis length were calculated for the first, second, third, fourth, and fifth embodiments based on these axis lengths. The relationship between the axial ratios *c*/*a* calculated here, the transfer rates, and laser irradiation times (λ/NA)/V(ns) in the first, second, third, fourth, and fifth embodiments shown in FIG. 6. It should be noted that the transfer rates shown in FIG. 6 refer to the maximum transfer rate out of the transfer rates at which an erasure rate of 30dB or above was achieved when the 8T-DC erasure rates of the optical recording media of each embodiment were measured. The laser irradiation time refers to the irradiation time that is required as a minimum for recording and erasing at the maximum transfer rate.

According to FIG. 6, it can be understood that when the axial ratio is in a range of 2.558 to 2.626 inclusive, even when the laser irradiation time is a short time equal to or below 32ns, this is still sufficient for recording and erasing, so that rewriting can be performed at a high transfer rate of 100Mbps or above.

### Sixth, Seventh, Eighth, and Ninth Embodiments

Components that are the same as in the optical recording media of the first and second embodiments described above have been given the same reference numerals and description of such has been omitted. A plurality of optical recording media were manufactured using polycarbonate discs as a substrate 20 and successively forming a reflective layer 5, a second dielectric layer, a recording layer, a first dielectric layer 3a, a heat sink layer (not shown), and a light transmitting layer 2 on a surface thereof. In this case, the light transmitting member 2 was formed after first forming the heat sink layer and then initializing (crystallizing the entire surface) the recording layer 4 using a bulk eraser. The second dielectric layer was formed with a thickness of 4nm by sputtering in an Ar atmosphere using a ZnS(50mol%)-SiO₂(50mol%) target. The sixth, seventh, eighth, and ninth embodiments were manufactured by constructing the recording layer of Sb, Mn, Te, Ge, and In, with the composition of each recording layer being changed by changing the amount of Mn in each optical recording medium. In this case, the composition of the recording layer in each embodiment was set as (In_{0.9}Sb_{75.7}Te_{17.5}Ge_{5.9}) ₁₋ₓMnₓ, with X=9.3 (at%) being set in the sixth embodiment, X=18.7 (at%) being set in the seventh embodiment, X=28.0 (at%) being set in the eighth embodiment, and X=33.1 (at%) being set in the ninth embodiment. In addition, the thickness of the recording layer was set at 14nm in each embodiment. The heat sink layer was formed by reactive sputtering in an Ar and N₂ atmosphere using an Al target. The thickness of the heat sink layer was set at 100nm.

Next, under the same conditions as in the first and second embodiments, the transfer rate for recording/erasing (the linear velocity, that is, the irradiation time of the laser spot) was varied and the 8T-DC erasure rate (dB) was measured. After this, the first dielectric layer 3a, the heat sink layer, and the light transmitting layer 2 were peeled from the optical recording media of the sixth to ninth embodiments using tape so as to expose the surfaces of the recording layers, thereby producing samples for X-ray diffraction analysis. Under the same conditions as the samples 1 to 4, X-ray diffraction analysis was performed and X-ray diffraction graphs were produced. It should be noted that according to the results of this X-ray diffraction analysis, it was confirmed that in the same way as for the samples 3 to 7, a total of three diffracted rays appear in a range of between 3.13 and 2.12 spacing inclusive, one each in the respective ranges of spacings 3.10±0.03, 2.25±0.03, and 2.15±0.03, with the crystallized recording layer being composed of a single phase with an A7 structure.

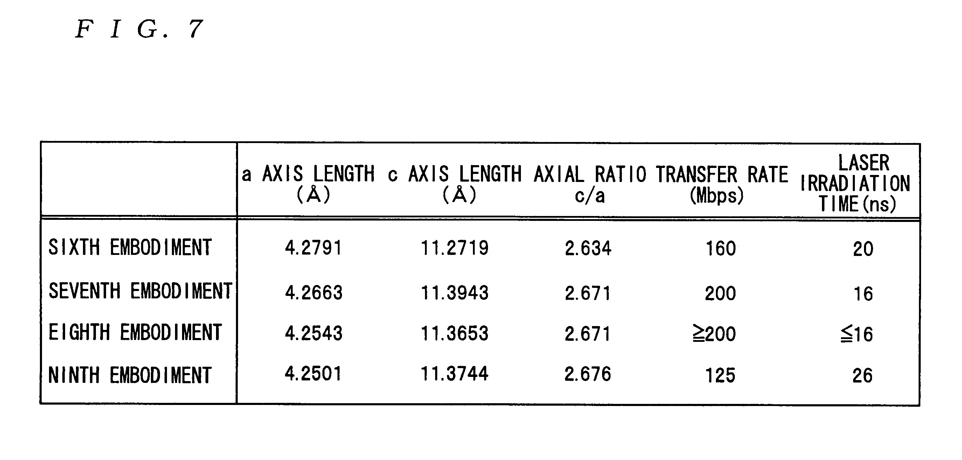

Next, indexing as a hexagonal lattice was performed for the diffracted rays appearing in the X-ray diffraction graphs of the sixth to ninth embodiments, the *a* axis length and the *c* axis length were calculated from the diffracted rays that originate from the hexagonal (104) plane and the hexagonal (110) plane, and the axial ratios *c*/*a* of the *c* axis length to the a axis length were calculated for each embodiment based on these axis lengths. The relationship between the axial ratios calculated here, the transfer rates, and laser irradiation times (λ/NA)/V(ns) in the sixth to ninth embodiments is shown in FIG. 7. It should be noted that the transfer rates shown in FIG. 7 refer to the maximum transfer rate out of the transfer rates for which an erasure rate of 30dB or above was obtained when the 8T-DC erasure rates of the respective optical recording media of each embodiment were measured. The laser irradiation time refers to the irradiation time that is required as a minimum for recording and erasing at the maximum transfer rate.

According to FIG. 7, it can be understood that in a range where the axial ratio *c*/*a* exceeds 2.626 but is no greater than 2.676, even when the laser irradiation time is a short time equal to or below 26ns, this is still sufficient for recording and erasing, so that rewriting can be performed at a high transfer rate of 125Mbps or above.

The present inventors also performed archival stability tests (experiments where a recorded signal is stored for a predetermined time and then reproduced and evaluated under the same conditions as the measurement of the 8T-DC erasure rate describe above, with the conditions for the experiments being a temperature of 80°C and a "dry" humidity level (i.e., 10% or below)) for optical recording media where the axial ratio c/a is in a range of 2.558 to 2.676 inclusive. According to these experiments, it was confirmed that even when the information is stored for a long time (as examples, for periods up to 200 hours, such as 25 hours, 50 hours, and 150 hours), deterioration is suppressed to within 1%, such as a deterioration where jitter increases from 9% to around 9.5%, which presents no problem whatsoever in actual use. Archival stability tests were also performed under the same conditions after performing multispeed recording at transfer rates of 100Mbps, 140Mbps, and 200Mbps. According to these experiments, it was confirmed that the increase in jitter was suppressed to within 1% for each of the transfer rates, which presents no problem whatsoever in actual use.

## Claims

1. An optical recording medium that includes a phase change recording layer where reversible phase changes between a crystal phase and an amorphous phase are used, wherein the recording layer includes at least Sb, Mn, and Te and, in a state corresponding to the crystal phase, has a structure where one diffracted ray is detected by X-ray diffraction as being present in each of three spacings (Å) of 3.10±0.03, 2.25±0.03, and 2.15±0.03, in a range of between 3.13 and 2.12 spacing inclusive, with diffracted rays not being detected in other ranges within the 3.13 to 2.12 spacing range.

2. An optical recording medium according to Claim 1, wherein when indexing as a hexagonal lattice is performed in a state corresponding to the crystal phase, the recording layer has a structure where a lattice plane corresponding to the diffracted ray present in a range of the 3.10±0.03 spacing is capable of being indexed as a hexagonal (012) plane, a lattice plane corresponding to the diffracted ray present in a range of the 2.25±0.03 spacing is capable of being indexed as a hexagonal (104) plane, and a lattice plane corresponding to the diffracted ray present in a range of the 2.15±0.03 spacing is capable of being indexed as a hexagonal (110) plane.

3. An optical recording medium that includes a phase change recording layer where reversible phase changes between a crystal phase and an amorphous phase are used, wherein when indexing has been performed for a hexagonal lattice in a state corresponding to the crystal phase, the recording layer has a structure where an axial ratio c/a of a c axis length to an a axis length is between 2.558 and 2.676 inclusive.

4. An optical recording medium according to any of Claims 1 to 3, wherein in the state corresponding to the crystal phase, the recording layer is constructed of a single phase with an A7 structure.
